## Europäisches Patentamt

## European Patent Office

## Office européen des brevets

(19)

(11) Veröffentlichungsnummer: **0 122 466**
**B1**

(12) **EUROPÄISCHE PATENTSCHRIFT**

(45) Veröffentlichungstag der Patentschrift:
**01.06.88**

(21) Anmeldenummer: **84102795.6**

(22) Anmeldetag: **14.03.84**

(51) Int. Cl.⁴: **G 05 D 23/185**, G 05 D 7/06,
F 24 F 11/053, F 16 K 31/04,
F 16 K 1/22

(54) **Vorrichtung zum Steuern der Regelgrösse eines Strömungsmengenreglers einer Klimaanlage.**

(30) Priorität: **17.03.83 DE 3309579**

(43) Veröffentlichungstag der Anmeldung:
**24.10.84 Patentblatt 84/43**

(45) Bekanntmachung des Hinweises auf die Patenterteilung:
**01.06.88 Patentblatt 88/22**

(84) Benannte Vertragsstaaten:
**AT BE CH DE FR GB LI LU NL SE**

(56) Entgegenhaltungen:
**DE - A - 2 448 271**
**DE - C - 714 543**
**US - A - 3 664 582**
**US - A - 3 942 552**
**US - A - 4 009 826**

(73) Patentinhaber: **Siegwart, Emil,**
**Michael-Blatter-Strasse 6, D-6603 Sulzbach-Neuweiler**
**(DE)**

(72) Erfinder: **Siegwart, Emil, Michael-Blatter-Strasse 6,**
**D-6603 Sulzbach-Neuweiler (DE)**

(74) Vertreter: **Bernhardt, Winfrid, Dr.-Ing.,**
**Kobenhüttenweg 43, D-6600 Saarbrücken (DE)**

ACTORUM AG

## Beschreibung

Die Erfindung betrifft eine Vorrichtung zum Steuern der Regelgrösse eines Strömungsmengenreglers einer Klimaanlage durch einen Temperaturfühler nach dem Warmluft- bzw. Kühlluftbedarf eines Raumes oder einer Raumgruppe, wobei die Regelgrösse durch die Vorspannung einer Feder bestimmt ist, die an einer durch eine längsverschiebbare Stange gebildeten Halterung befestigt ist und ihrerseits ein den Strömungsquerschnitt verengendes Element in veränderlicher Stellung hält.

In Klimaanlagen, die in der wärmeren Jahreszeit mit Luft kühlen und in der kälteren Jahreszeit mit der Luft heizen, muss die in der Zeiteinheit in einen Raum abgegebene Luftmenge nach der erforderlichen Wärmeabfuhr bzw. Wärmezufuhr gesteuert werden. Eine Steuerung der Vorkühlung bzw. Vorwärmung der Luft scheidet aus mehreren Gründen aus.

Es ist bekannt, die für die einzelnen Räume oder für Raumgruppen eines Gebäudes benötigte Luft Verteilerkästen zu entnehmen und dort die Eingänge der verschiedenen Luftleitungen mit Klappen zu versehen, deren Öffnungsweiten je nach Bedarf von Hand verstellt werden. Da diese Klappen nicht auf Druckunterschiede reagieren, lassen sie bei Druckanstieg und Druckabfall in dem Verteilerkasten, wie er infolge verringerter bzw. vergrösserter Entnahme auftritt, zuviel bzw. zu wenig Luft strömen.

Es besteht daher das Bedürfnis, Strömungsmengenregler, die unabhängig vom herrschenden Druck eine bestimmte Strömungsmenge einregeln, mit dieser ihrer Regelgrösse auf unterschiedliche Heiz- und Kühllasten einzustellen, und dies dann auch selbsttätig von einem Temperaturfühler aus gesteuert. Da die Regelgrösse durch die Vorspannung einer Feder bestimmt ist, die an einer Halterung befestigt ist und ihrerseits ein den Strömungsquerschnitt verengendes Element in veränderlicher Stellung hält, muss die Vorspannung der Feder zur Erhöhung der Regelgrösse durch Anziehen der Halterung erhöht und zur Verringerung der Regelgrösse durch Vorschieben der Halterung verringert werden. Dabei besteht jedoch die Schwierigkeit, dass das von einem Temperaturfühler gegebene Steuersignal sich bei steigender wie auch bei fallender Temperatur jeweils nur gleichsinnig ändert, die Änderung der Regelgrösse des Strömungsmengenreglers aber in dem in Betracht stehenden Temperaturintervall umkehrt: Von tiefen zu hohen Temperaturen fällt zunächst die Heizlast und damit der Strömungsbedarf, steigt aber der Strömungsbedarf dann wieder wegen steigender Kühllast, und umgekehrt. Um das Steuersignal entsprechend umzuwandeln, hat man u.a. zwei gegenläufig geschaltete Temperaturfühler vorgeschlagen, zwischen denen beim Übergang von Heizung zu Kühlung die Steuerung wechselt. Zu Lösungen, die technisch und wirtschaftlich eine Verwirklichung erlaubt hätten, ist man bisher jedoch nicht gekommen.

Der Erfindung liegt die Aufgabe zugrunde, eine einfache und funktionssichere Vorrichtung zum Steuern der Regelgrösse eines Strömungsmengenreglers nach dem Warmluft- bzw. Kühlluftbedarf zu schaffen.

Die Erfindung löst sich von den Versuchen der Bewältigung auf elektrotechnischem Wege und sieht eine Vorrichtung der eingangs bezeichneten Art vor, bei der an der genannten Stange zwischen zwei Führungen der Stange eine weitere Stange in einem Winkel starr befestigt ist und ein von dem Temperaturfühler gesteuerter Stellmotor über einen Schwenkhebel und ein drehbar an diesem gelagertes, auf der weiteren Stange verschiebbares Verbindungsteil mit der weiteren Stange in solcher Anordnung gekoppelt ist, dass der Schwenkhebel auf dem Weg von einer Endstellung für die höchste Heizlast nach einer Endstellung für die höchste Kühllast über einen Totpunkt hinweggeht, derart, dass er die Stange auf dem genannten Weg vorschiebt und wieder anzieht.

Da ohnehin ein Stellmotor mechanisch mit der Halterung gekoppelt werden muss, bedeutet dies kaum einen weiteren Aufwand. Die Funktionssicherheit ist praktisch ebenso gross wie bei elektrischer Umwandlung des gleichsinnigen Steuersignals in umkehrende Bewegung.

Die die Halterung bildende Stange kann mit der weiteren Stange durch ein Klemmteil verbunden sein, in dem sie nach Lösen der Klemmung unter Schraubung in den Windungen der Feder drehbar und längsverschiebbar ist, so dass die Windungszahl der Feder und damit die Federkonstante einstellbar ist.

Als vorteilhafte Ausgestaltung der Erfindung in baulicher Hinsicht wird schliesslich vorgeschlagen, dass die Vorrichtung den Stellmotor an dem Rücken und den Schwenkhebel und die Stangen zwischen den Schenkeln eines flach-U-förmig gebogenen Bleches aufweist, das mit dem einen Schenkel an dem Gehäuse des Strömungsreglers befestigt ist und dessen beide Schenkel von der Stange als einfache Führung für diese durchstossen sind.

Vorzugsweise ist der Stellmotor mit der Halterung über einen Schwenkhebel von solcher Anordnung gekoppelt, dass dieser auf dem genannten Weg über einen Totpunkt hinweggeht.

Diese Lösung ist besonders einfach beispielsweise im Vergleich zu einer Kulissenführung, die an sich auch möglich wäre.

In weiterer zweckmässiger Ausgestaltung der Erfindung ist die Halterung durch eine längsverschiebbar geführte Stange gebildet, an der eine weitere Stange im rechten Winkel starr befestigt ist, auf der ein drehbar an dem Schwenkhebel gelagertes Verbindungsteil verschiebbar ist.

Die die Halterung bildende Stange kann mit der weiteren Stange durch ein Klemmteil verbunden sein, in dem sie nach Lösen der Klemmung unter Schraubung in den Windungen der Feder drehbar und längsverschiebbar ist, so dass die Windungszahl der Feder und damit die Federkonstante einstellbar ist.

Als vorteilhafte Ausgestaltung der Erfindung in baulicher Hinsicht wird schliesslich vorgeschlagen, dass die Vorrichtung den Stellmotor an dem Rücken und den Schwenkhebel und die Stangen zwischen den Schenkeln eines flach-U-förmig gebogenen Bleches aufweist, das mit dem einen Schenkel an dem Gehäuse des Strömungsreglers befestigt ist und dessen beide Schenkel von der die Halterung der Feder bildenden Stange als einfache Führung für diese durchstossen sind.

Die Zeichnungen geben ein Ausführungsbeispiel der Erfindung wieder.

Fig. 1 zeigt einen axialen Längsschnitt durch einen Strömungsmengenregler mit angesetzter Steuervorrichtung.

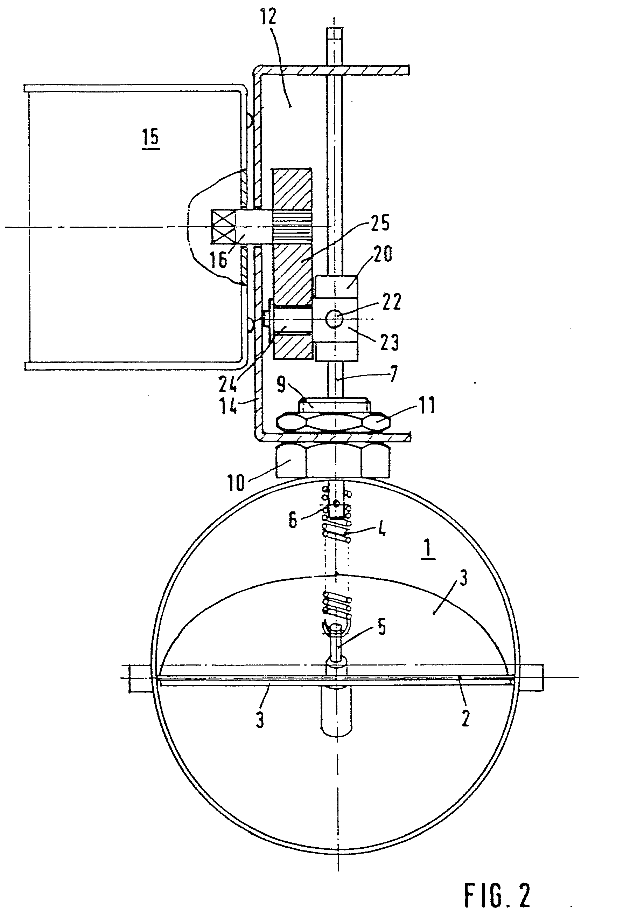

Fig. 2 zeigt einen Schnitt nach Linie II-II in Fig. 1.

In einer in der Pfeilrichtung durchströmten Luftleitung 1 ist auf einer Welle 2 eine gewinkelte Regelklappe 3 gelagert. Sie wird gegen die Luftströmung, die sie zu schliessen sucht, gehalten durch eine Feder 4, die über einen Hebelarm 5 an ihr angreift und die selbst durch eine mit einem Querschnitt 6 versehene Stange 7 gehalten ist. Die Stange 7 ist mit dem Querschnitt 6 so weit in die Windungen der Feder 4 eingeschraubt, dass die zwischen dem Querstift 6 und dem Hebelarm 5 verbliebene Zahl von Windungen die benötigte Federkonstante hervorbringt, nämlich im Zusammenwirken mit dem mit der Klappenstellung sich ändernden Kraftangriffswinkel am Hebelarm 5, derart, dass steigender Druck der anströmenden Luft die Regelklappe 3 immer so viel weiter schliesst, dass die Strömungsmenge hinter der Regelklappe gleichbleibt. Gezeichnet ist die Ruhestellung, gestrichelt angedeutet eine mittlere Arbeitsstellung und strichpunktiert die vollständig verschliessende Endstellung. Im einzelnen sind der Aufbau und die Arbeitsweise eines solchen Reglers in der DE-OS 2 448 271 beschrieben.

Über einen als Schraube mit einem Aussengewinde und einer Art Schraubenkopf 8 versehenen Stutzen 9, der mittels einer Mutter 10 an der Wandung der Luftleitung 1 angeschraubt ist, ist mittels einer weiteren Mutter 11 eine Steuervorrichtung 12 an der Luftleitung 1 befestigt. Eine weitere Befestigung ist bei 13 angedeutet.

Die Steuervorrichtung 12 sitzt an dem Stutzen 9 und der weiteren Befestigung 13 mit dem einen Schenkel eines flach-U-förmig gewinkelten, den Vorrichtungsrahmen bildenden Bleches 14. Auf dem Rücken des Bleches 14 ist ein Stellmotor 15 angeordnet, dessen Abtriebswelle 16 das Blech 14 durchstösst. Die Stange 7 ragt durch den Stutzen 9, in dem sie bei 17 geführt ist, hindurch bis in die Bohrung 18 im anderen Schenkel des Bleches als zweite Führung. Am Ende der Stange 7 ist ein Einschnitt 19 zu erkennen, in den für die weiter oben erwähnte Drehung der Stange ein Schraubenzieher greifen kann.

Die Stange durchsetzt in einer Bohrung einen Klotz 20, der mittels einer Schraube 21 auf ihr festgeklemmt ist und in den rechtwinklig zu der Stange 7 eine weitere Stange 22 eingeschraubt ist.

Diese durchragt mit geringem Spiel eine Bohrung in einem Verbindungsteil 23, das bei 24 in einem auf der Abtriebswelle 16 sitzenden Schwenkhebel 25 drehbar gelagert ist.

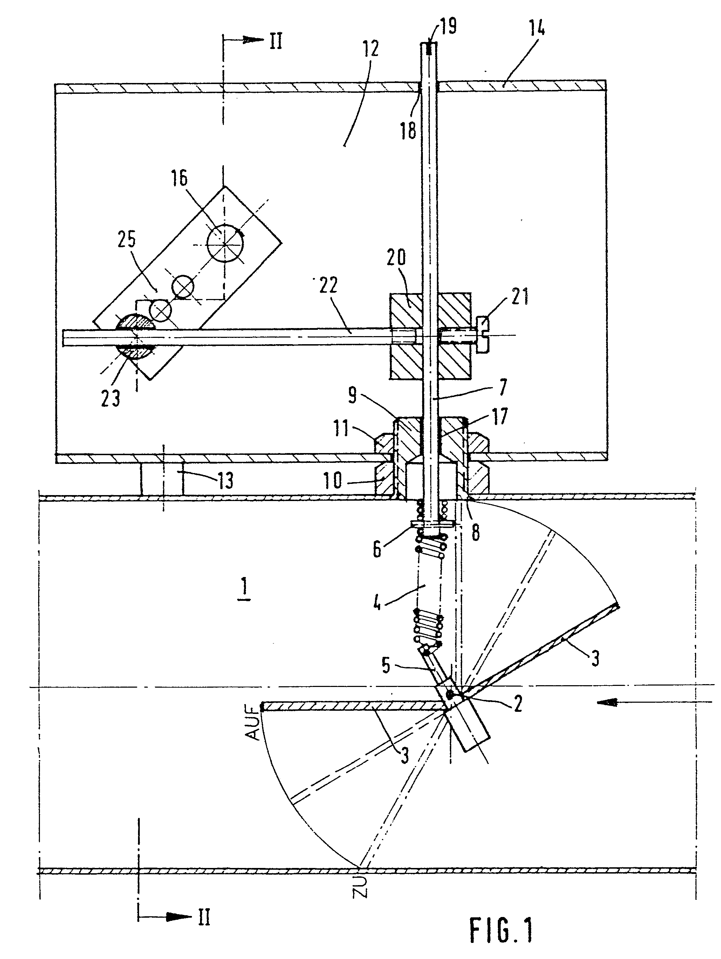

Die in Fig. 1 gezeigte Stellung des Schwenkhebels 25 entspricht beispielsweise einer mittleren Heizlast. Für eine grössere Heizlast würde der Schwenkhebel 25 noch etwas weiter im Uhrzeigersinn schwenken und damit über die weitere Stange 22, auf der dabei das Verbindungsteil 23 noch weiter nach aussen rutscht, und die Stange 7 die Feder 4 weiter anziehen, d.h. stärker spannen. Die Regelgrösse des Volumenstromreglers würde damit erhöht, d.h., der Volumenstromregler regelt, unabhängig von Druckschwankungen, eine bestimmte, grössere Strömungsmenge ein. Gibt, umgekehrt, bei steigender Temperatur der Temperaturfühler, an den der Stellmotor 15 angeschlossen ist, ein einer Verkleinerung der Strömungsmenge entsprechendes Steuersignal, so dreht sich die Abtriebswelle 16 des Stellmotors 15 mit dem Schwenkhebel 25 im Gegenuhrzeigersinn und schiebt die Stange 7 mit dem Querstift 6 vor. Die Vorspannung der Feder 4 wird dann verringert und damit die Strömungsmenge, da sich die Regelklappe 3 nun leichter schliesst.

Gelangt jedoch der Schwenkhebel 25 über den Totpunkt, d.h. seine zur weiteren Stange 22 senkrechte Stellung, hinaus, so zieht er die Stange 7 und die Feder 4 wieder an und erhöht demgemäss die Strömungsmenge. Dies ist für steigende Kühllast vorgesehen; die Vorwärmung der Luft hört bei der Stellung des Schwenkhebels 25 am Totpunkt auf.

**Patentansprüche**

1. Vorrichtung zum Steuern der Regelgrösse eines Strömungsmengenreglers einer Klimaanlage durch einen Temperaturfühler nach dem Warmluft- bzw. Kühlluftbedarf eines Raumes oder einer Raumgruppe, wobei die Regelgrösse durch die Vorspannung einer Feder (4) bestimmt ist, die an einer durch eine längsverschiebbare Stange (7) gebildeten Halterung (6, 7) befestigt ist und ihrerseits ein den Strömungsquerschnitt verengendes Element (3) in veränderlicher Stellung hält, dadurch gekennzeichnet, dass an der genannten Stange (7) zwischen zwei Führungen (17, 18) der Stange (7) eine weitere Stange (22) in einem Winkel starr befestigt ist und ein von dem Temperaturfühler gesteuerter Stellmotor (15) über einen Schwenkhebel (25) und ein drehbar an diesem gelagertes, auf der weiteren Stange (22) verschiebbares, Verbindungsteil (23) mit der weiteren Stange (22) in solcher Anordnung gekoppelt ist, dass der Schwenkhebel (25) auf dem Weg von einer Endstellung für die höchste Heizlast nach einer Endstellung für die höchste Kühllast über einen Totpunkt hinweggeht, derart, dass er die Stange (7) auf dem genannten Weg vorschiebt und wieder anzieht.

2. Vorrichtung nach Anspruch 1, dadurch gekennzeichnet, dass die Stange (7) mit der weiteren Stange (22), vorzugsweise im rechten Winkel, durch ein Klemmteil (20, 21) verbunden ist, in dem sie nach Lösen der Klemmung (21) unter Schraubung in den Windungen der Feder (4) drehbar und längsverschiebbar ist.

3. Vorrichtung nach Anspruch 1 oder 2, dadurch gekennzeichnet, dass sie den Stellmotor (15) an dem Rücken und den Schwenkhebel (25) und die Stangen (7; 22) zwischen den Schenkeln eines flach-U-förmig gebogenen Bleches (14) aufweist, das mit dem einen Schenkel an dem Gehäuse (1) des Strömungsmengenreglers (1 – 10) befestigt ist und dessen beide Schenkel von der Stange (7) in deren genannten Führungen (17, 18) durchstossen sind.

## Claims

1. Device for controlling the standard size of a flow volume governor of an air-conditioning unit by a temperature sensor depending on the requirement for warm air or cold air respectively of a room or group of rooms, the standard size being determined by the initial tension of a spring (4), which is fixed to a holder (6, 7) formed by a longitudinally displacable bar (7) and in turn supports a component (3) narrowing the flow cross section in an adjustable position, characterised in that to the said bar (7) between two guides (17, 18) of the bar (7) is rigidly fixed a further bar (22) at an angle and a servomotor (15) controlled by the temperature sensor is coupled to said further bar (22) via a rocking lever (25) and a connection part (23) rotatably positioned on this lever and displacable on the further bar (22) in such an arrangement that the rocking lever (25) moves away on the path from a final position for the highest heating load to a final position for the highest cooling load via a dead centre so that it pushes the bar (7) away on said path and then draws it back.

2. Device according to Claim 1, characterised in that the bar (7) is connected to the further bar (22), preferably at a right angle, by a clamping part (20, 21), in which it is rotatable and longitudinally displacable after releasing the clamp (21) by screwing into the coils of the spring (4).

3. Device according to Claim 1 or 2, characterised in that it has the servomotor (15) on the rear and the rocking lever (25) and the bars (7; 22) between the arms of a flat U-shaped sheet (14), which is fixed by one arm to the housing (1) of the flow volume governor (1 – 10) and the two arms of which are perforated by the bar (7) in its said guides (17, 18).

## Revendications

1. Dispositif de commande de la valeur de réglage d'un régulateur de débit d'écoulement dans une installation de climatisation par un organe sensible à la température d'après les besoins en air chaud ou en air froid d'un local ou d'un groupe de locaux, la valeur de réglage étant déterminée par la précontrainte d'un ressort (4) qui est fixé à un dispositif de maintien (6, 7) constitué par une tige (7) qui peut se déplacer dans le sens longitudinal et maintient dans une position qui peut varier un élément (3) qui rétrécit la section d'écoulement, caractérisé en ce qu'à la tige (7) en question est rigidement fixée suivant un angle, entre deux dispositifs de guidage (17, 18) de la tige (7), une autre tige (22) et en ce qu'un servo-moteur (15), commandé par l'organe sensible à la température, est accouplé, par l'intermédiaire d'un levier pivotant (25) et d'une pièce de liaison (23), montée de manière à pouvoir tourner sur ce levier et se déplacer sur l'autre tige (22), à l'autre tige (22) de telle manière que, sur son trajet entre une position terminale correspondant au besoin de chauffage maximal et une position terminale correspondant au besoin de refroidissement maximal, le levier pivotant (25) passe par un point mort, de telle manière qu'il pousse puis tire la tige (7) sur le trajet en question.

2. Dispositif selon la revendication 1, caractérisé en ce que la tige (7) est reliée à l'autre tige (22), de préférence suivant un angle droit, par une pièce de serrage (20, 21) dans laquelle, après le relâchement du serrage (21), elle peut, par visage, tourner et se déplacer dans le sens longitudinal dans les spires du ressort (4).

3. Dispositif selon l'une des revendications 1 ou 2, caractérisé en ce que le servo-moteur (15) est situé à l'arrière et que le levier pivotant (25) et les tiges (7, 22) sont situés entre les branches d'une tôle plate (14) pliée en forme d'U qui est fixée par l'une de ses branches à l'enveloppe (1) du régulateur (1 à 10) du débit d'écoulement et dont les deux branches sont traversées par la tige (7) au niveau des dispositifs de guidage (17, 18).

FIG.1

FIG. 2